# EUROPÄISCHE PATENTSCHRIFT

(11) **EP 0 484 583 B1**
(45) Veröffentlichungstag und Bekanntmachung des Hinweises auf die Patenterteilung: **12.10.1994**
(21) Anmeldenummer: 90121441.1
(22) Anmeldetag: 09.11.1990
(51) Int. Cl.: F16D 41/07

(54) **Klemmkörper-Freilauf mit einem Käfigring**
Sprag clutch with a single annular cage
Roue libre à corps de coincement avec une cage annulaire unique

(43) Veröffentlichungstag der Anmeldung: 13.05.1992
(73) Patentinhaber: Borg-Warner Automotive GmbH, D-69123 Heidelberg (DE)
(72) Erfinder: Leitz, Hermann, D-6900 Heidelberg (DE)
(74) Vertreter: Meyer-Roedern, Giso, Dr.

(56) Entgegenhaltungen:
- FR-A- 2 342 429
- FR-A- 2 385 948
- GB-A- 1 174 226
- GB-A- 2 084 671
- US-A- 2 753 027
- US-A- 3 219 163
- US-A- 4 802 261

## Beschreibung

Die Erfindung betrifft einen Klemmkörper-Freilauf mit einem Innenring und einem Außenring, die einander mit Abstand konzentrisch umschließen, mit zwischen den Ringen sitzenden, im wesentlichen knochenförmigen Klemmkörpern, die in einer Drehrichtung die Ringe drehmomentübertragend koppeln und in Gegenrichtung ein freies verdrehen des einen Ringes gegen den anderen erlauben, mit einem zwischen Innenring und Außenring auf Höhe der radial inneren Körperverdickung des Klemmkörper angeordneten, diese synchron führenden einzigen Käfigring und mit einem zwischen dem Käfigring und dem Außenring auf Höhe der radial mittigen Körpereinschnürung der Klemmkörper angeordneten, aus Bandmaterial bestehenden, in sich geschlossenen Federring, der miteinander verbindbare Bandenden aufweist und die Klemmkörper in Drehrichtung vorspannt.

Ein derartiger Klemmkörper-Freilauf ist durch die FR-A 23 85 948 vorgezeichnet. Diese Druckschrift beschreibt einen Klemmkörper-Freilauf mit einem Käfig, der aus einem federnden, mit Fenstern für Klemmkörper versehenen und zwei miteinander verhakbare Enden aufweisenden Stahlband besteht. An der Verbindungsstelle des Stahlbands befindet sich ein Fenster mit weggebrochener Anfederung. Der Käfig kommt im Bereich der radial äußeren Körperverdickung der Klemmkörper zu liegen. Im Bereich der radial inneren Körperverdickung der Klemmkörper ist ein Leiterband zur synchronen Zwangsführung der Klemmkörper angeordnet. Das Leiterband soll aus Gummi oder einem anderen Werstoff, insbesondere Stahldraht oder Kunststoff, bestehen.

Aus der US-A 48 02 261 ist ein Klemmband mit verhakbaren Bandenden bekannt, das die Antriebswelle eines Kraftfahrzeugs umschlingt.

Aufgabe der Erfindung ist es, einen baulich vereinfachten, herstellungs- und montagetechnisch unaufwendigen Klemmkörper-Freilauf zu schaffen, der eine hohe Sicherheit gegen Pop-Out der Klemmkörper bietet.

Diese Aufgabe wird mit einem Klemmkörper-Freilauf der eingangs genannten Art dadurch gelöst, daß an die Stege des Käfigrings den Pop-Out von Klemmkörpern verhindernde Rippen angeformt sind.

Der Federring kann von dem Käfigring radial beabstandet sein. Es ist aber auch eine Anordnung möglich, bei der der Federring den Käfigring in bündiger Anlage umschlingt.

Der Federring besteht vorzugsweise aus zwei axial beabstandeten Ringsegmenten und diese verbindenden axialen Stegen, zwischen denen Taschen für die Klemmkörper gebildet sind. An den Stegen kann wenigstens eine Lasche ausgebildet sein, die sich zu einem Haken umbiegen und an anderer Stelle zur Bildung einer Einhakkante abschneiden läßt. Letzterer Schneidevorgang kann in unaufwendiger Weise zugleich mit dem Abschneiden von Federbandstücken vorgenommen werden. Das Biegen der Haken erfolgt vorteilhafterweise ebenfalls beim Abschneiden in einem Arbeitsgang nach dem formgebenden Prägen des Federbands. In einer bevorzugten Ausführungsform ist die Lasche am Bandanfang abgeschnitten, am Bandende zu einem Haken gebogen und im übrigen vorzugsweise unbearbeitet.

An den Stegen kann wenigstens eine in die Tasche für den Klemmkörper hineinragende, den Klemmkörper beaufschlagende Federzunge ausgebildet sein. In einer Variante befindet sich im axialen Mittelbereich der Stege eine Federzunge und in symmetrischer Anordnung beidseits davon je eine Lasche, die sich zu einem Haken biegen bzw. an anderer Stelle zur Bildung einer Einhakkante abschneiden läßt. In einer anderen Variante ist im axialen Mittelbereich der Stege eine solche Lasche und in symmetrischer Anordnung beidseits davon je eine Federzunge vorgesehen.

Die Ringsegmente des Federrings können eine vorzugsweise durch Prägen erhaltene Wellung aufweisen. Das ist für die Rundform des Federrings von Vorteil.

Die Haken, die Federzungen und gegebenenfalls die Wellung des Federrings können nach radial innen oder radial außen weisen. Das gilt insbesondere für einen von dem Käfigring radial beabstandeten Federring. Bei einem den Käfigring in bündiger Anlage umschlingenden Federring ist eine Orientierung der Haken, Federzungen und gegebenenfalls vorhandenen Wellung radial nach außen bevorzugt.

Die Federringe bestehen vorzugsweise aus von einem fortlaufenden Band geschnittenen Federbandstücken. Die Ringsegmente am Bandende der Federbandstücke sind vorzugsweise in Verlängerung der Stegkante durchtrennt, von der die Haken abstehen. Der Bandanfang eines Federbandstücks kann durch einen Steg gebildet sein, von dem die Laschen zur Bildung von Einhakkanten abgeschnitten sind. Es besteht aber auch die Möglichkeit, den Ringsegmenten am Bandanfang des Federbandstücks überstand von dem ersten Steg zu lassen, von dem die Laschen abgeschnitten sind, und zwar vorzugsweise langen Überstand. Es ergibt sich so eine bessere Rundform des durch Einhaken in sich geschlossenen Federrings.

Der als einziger Käfigring vorgesehene Innenkäfigring besteht vorzugsweise aus Metall. Es ist aber auch eine Ausbildung des Käfigrings aus Kunststoff möglich, wobei vorzugsweise ein elastischer, zäher Werkstoff verwendet wird. Bei einem Kunststoffkäfigring können in unaufwendiger Weise Rippen an die Stege angeformt sein, um einen verbesserten Schutz gegen Pop-Out zu gewährleisten.

Die Erfindung wird im folgenden anhand von in den Zeichnungen dargestellten Ausführungsbeispielen näher erläutert. Es zeigen:
- Fig. 1: ein Federband, von dem zur Herstellung von Federringen Bandstücke abgeschnitten werden, in Draufsicht;
- Fig. 2: die Mantelabwicklung einer ersten Variante eines geschnittenen und geprägten Federbandstücks;
- Fig. 3: die Mantelabwicklung einer zweiten Variante eines geschnittenen und geprägten Federbandstücks;
- Fig. 4: die Seitenansicht eines aus dem Federbandstück gebogenen Federrings;
- Fig. 5: die teilweise geschnittene Seitenansicht eines Klemmkörper-Freilaufs mit einem Käfigring aus Kunststoff und dem davon radial beabstandeten Federring; und
- Fig. 6 und Fig. 7: die Mantelabwicklung einer dritten bzw. vierten Variante eines geschnittenen und geprägten Federbandstücks.

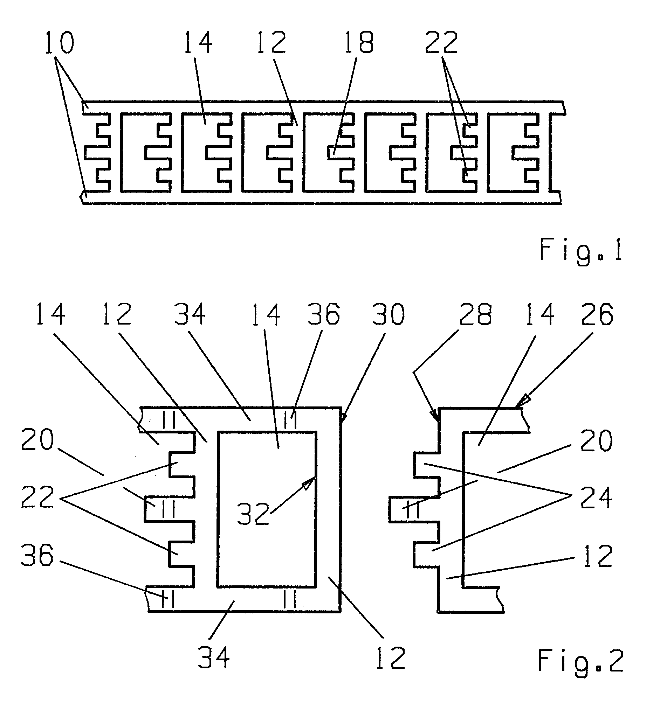

Das in Fig. 1 gezeigte Federband ist aus einem flachen Rechteckstreifen Federstahl gestanzt. Es besteht aus zwei parallelen, sich in Bandlängsrichtung erstreckenden Randstreifen 10 und diese verbindenden Querstegen 12. Zwischen den Stegen 12 sind Taschen 14 für je einen Klemmkörper 16 ausgebildet. In der Stegmitte geht eine einseitig in Längsrichtung sich erstreckende, in die Tasche 14 hineinragende längere Lasche 18 ab, aus der eine den Klemmkörper 16 beaufschlagende Federzunge 20 gebogen wird. Beidseits der mittleren Lasche 18 sind in symmetrischer Anordnung kürzere Laschen 22 vorgesehen, die sich zu derselben Seite in Längsrichtung in die Tasche 14 hineinerstrecken und zu Haken 24 gebogen werden können, die dazu dienen, aus geprägten und dann abgeschnittenen Stücken Federband bestehende Federringe 26 über den Umfang zu schließen.

Fig. 2 zeigt das Federband nach dem Prägen. Die Schnittlinie am Bandende des Federbandstücks, entlang derer dieses- von dem fortlaufenden Band abgeschnitten ist, verläuft in Verlängerung einer Stegvorderkante 28, von der die zu Haken zu biegenden Laschen 22 abstehen. Am Bandanfang ist das Federbandstück in Verlängerung einer Steghinterkante 30 von dem Band abgeschnitten. An der zugehörigen Stegvorderkante 32 sind die Laschen 18, 22 abgeschnitten, um eine Einhakkante zu bilden: Die mittleren Laschen 18 an den Stegen 12 des aus dem geprägten Federband gebildeten Federrings 26 sind allesamt zu Federzungen 20 gebogen. Die äußeren Laschen 22 sind hingegen nur am Bandende zu Haken 24 gebogen und im übrigen unbearbeitet. Aus den seitlichen Randstreifen 10 entstandene Ringsegmente 34 des Federrings 26 sind in radialer Richtung mit einer Wellung 36 versehen. Das Wellen der Ringsegmente und das Biegen der Federzungen 20 und Haken 24 erfolgt vorzugsweise in aufeinanderfolgenden Arbeitsgängen durch Prägen. Zugleich mit dem letzten Prägevorgang oder danach werden Federbandstücke von dem durch die Wellung 36 gekrümmten Federband abgeschnitten.

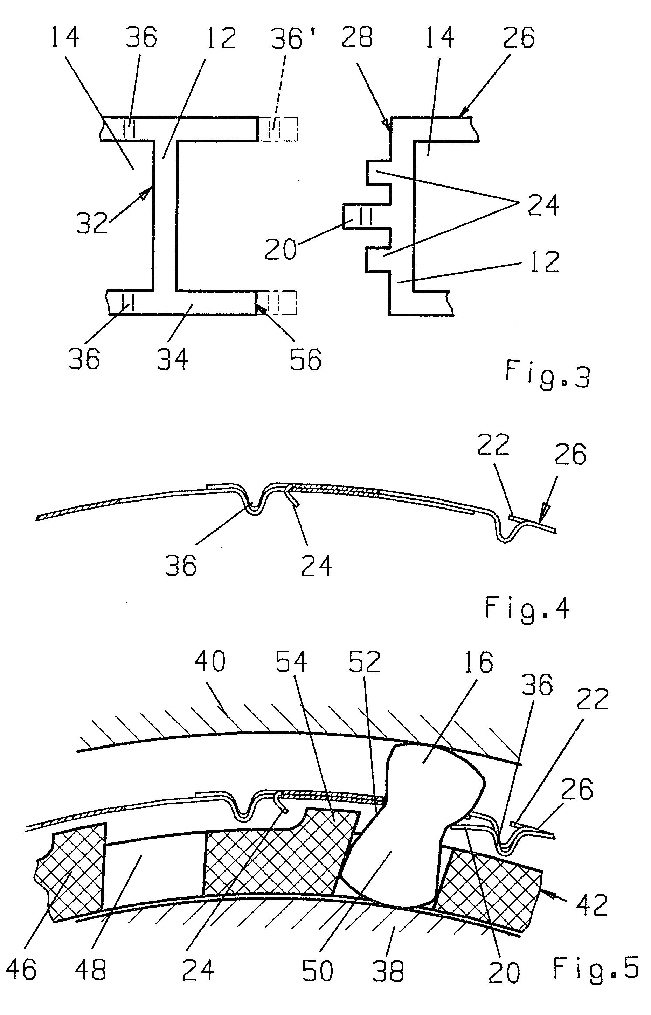

Fig. 3 und 4 zeigen eine alternative Ausführungsform des Federrings 26, bei der die die Randstreifen 10 durchtrennende Schnittlinie 56 am Bandanfang vor einer Wellenprägung 36' verläuft, die weggeschnitten wird. Hierdurch stehen die Ringsegmente 34 am Bandanfang von dem ersten Steg 12 mit maximaler Länge ab. Daraus resultiert eine bessere Rundform des in sich geschlossenen Federrings 26.

Fig. 5 zeigt einen Klemmkörper-Freilauf mit einem Federring 26, der aus einem an dem Bandenden verhakten Federbandstück besteht. Der Freilauf hat einen Innenring 38 und einen Außenring 40, die einander mit Abstand konzentrisch umschließen. Zwischen den Ringen 38, 40 befinden sich im wesentlichen knochenförmige Klemmkörper 16. Die Klemmkörper 16 kommen bei Relativdrehung der Ringe 38, 40 in der einen Richtung (Sperrichtung) zum Eingriff, so daß die Ringe 38, 40 drehmomentübertragend gekoppelt sind. Bei Relativdrehung der Ringe 38, 40 in der Gegenrichtung (Freilaufrichtung) sind die Ringe 38, 40 freigegeben.

Die Klemmkörper 16 sind radial innen durch einen einzigen Käfigring 42 auf Distanz gehalten und geführt. Der Käfigring kommt im wesentlichen konzentrisch zu den Freilaufringen 38, 40 zu liegen und hat umlaufende Ringsegmente 44, die durch axiale Stege 46 verbunden sind. Zwischen den Stegen 46 sind Taschen 48 gebildet, die die Klemmkörper 16 im Bereich ihrer radial inneren Körperverdickung 50 aufnehmen.

Im radialen Mittelbereich sind die Klemmkörper 16 durch den Federring 26 zugleich gehalten, angefedert und geführt. Der Federring 26 kommt mit geringem Abstand radial außen von dem Käfigring 42 zu liegen. Die Klemmkörper 16 sitzen mit ihrer mittigen Körpereinschnürung 52 in den Taschen 14 des Federrings 26 ein. Die Klemmkörper 16 werden durch je eine radial nach innen weisende Federzunge 20 beaufschlagt und dadurch in Eingriffsstellung vorgespannt. Die Wellung 36 der Ringsegemente 34 ist ebenfalls radial nach innen gerichtet. Eine Führungsfunktion für die Klemmkörper 16 hat der Federring 26 dadurch, daß er in sich geschlossen ist. Hierzu sind die radial nach innen weisenden Haken 24 an den Einhakkanten 32 im Eingriff. Der Federring 26 ist im eingehakten Zustand gespannt und durch seine Federelastizität gesichert.

Der Käfigring 42 besteht aus Kunststoff, wobei vorzugsweise ein elastischer, zäher Werkstoff zum Einsatz kommt. Der dargestellte Kunststoff-Käfigring ist so dick, daß er die radial innere Körperverdickung 50 der Klemmkörper 16 vollständig aufnimmt. An die Stege 46 des Käfigrings 42 sind am radial äußeren Rand auf der nicht mit der Federzunge 20 beaufschlagten Seite der Klemmkörper 16 in axialer Richtung sich erstreckende, radial nach außen abstehende Rippen 54 angeformt, durch die der Schutz gegen Pop-Out verbessert wird. Der Federring 26 kommt mit geringem radialem Abstand außen von dem Käfigring 42 zu liegen. Seine Haken 24 für die Federzungen 20 und Wellung 36 weisen nach innen.

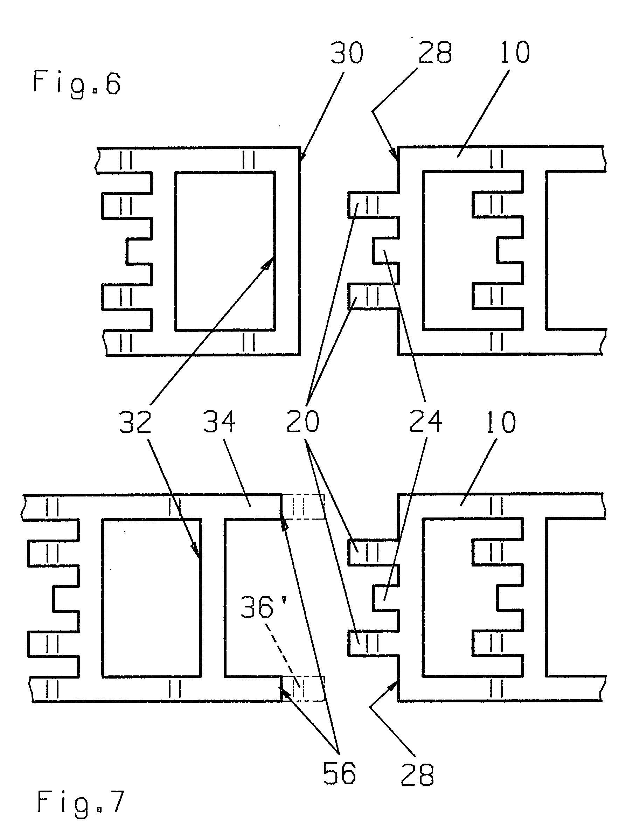

Fig. 6 und Fig. 7 zeigen Varianten des gestanzten, geprägten und geschnittenen Federbands, bei denen von den Stegen 12 in axial mittiger Anordnung ein einziger Haken 24 abgeht, der beidseits von zwei Federzungen 20 flankiert wird. Die Federzungen 20 und die Wellung 36 des Federbands haben gleiche Form und liegen auf gleicher Höhe, was das Prägen vereinfacht. Der Bandanfang ist gemäß Fig. 6 in Verlängerung einer Steghinterkante 30, und gemäß Fig. 7 vor einer Wellung 36' abgeschnitten (Schnittlinie 56). Am Bandende verläuft der Schnitt jeweils in Verlängerung einer Stegvorderkante 28.

## Patentansprüche

1. Klemmkörper-Freilauf mit einem Innenring (38) und einem Außenring (40), die einander mit Abstand konzentrisch umschließen, mit zwischen den Ringen (38, 40) sitzenden, im wesentlichen knochenförmigen Klemmkörpern (16), die in einer Drehrichtung die Ringe (38, 40) drehmomentübertragend koppeln und in Gegenrichtung ein freies Verdrehen des einen Ringes gegen den anderen erlauben, mit einem zwischen Innenring (38) und Außenring (40) auf Höhe der radial inneren Körperverdickung (50) der Klemmkörper (16) angeordneten, diese synchron führenden einzigen Käfigring (42) und mit einem zwischen dem Käfigring (42) und dem Außenring (40) auf Höhe der radial mittigen Körpereinschnürung (52) der Klemmkörper (16) angeordneten, aus Bandmaterial bestehenden, in sich geschlossenen Federring (26), der miteinander verbindbare Bandenden aufweist und die Klemmkörper (16) in Drehrichtung vorspannt, dadurch gekennzeichnet, daß an die Stege (46) des Käfigrings (42) den Pop-Out von Klemmkörpern (16) verhindernde Rippen (54) angeformt sind.

2. Klemmkörper-Freilauf nach Anspruch 1, dadurch gekennzeichnet, daß der Federring (26) von dem Käfigring (42) radial beabstandet ist.

3. Klemmkörper-Freilauf nach Anspruch 1, dadurch gekennzeichnet, daß der Federring (26) den Käfigring (42) in bündiger Anlage umschlingt.

4. Klemmkörper-Freilauf nach einem der Ansprüche 1 bis 3, dadurch gekennzeichnet, daß die Bandenden des Federrings (26) miteinander verhakbar sind.

5. Klemmkörper-Freilauf nach einem der Ansprüche 1 bis 4, dadurch gekennzeichnet, daß der Federring (26) aus zwei axial beabstandeten Ringsegmenten (34) und diese verbindenden axialen Stegen (12) besteht, zwischen denen Taschen (14) für die Klemmkörper (16) gebildet sind, und daß an den Stegen (12) wenigstens eine Lasche (22) ausgebildet ist, die zu einem Haken (24) umbiegbar und an anderer Stelle zur Bildung einer Einhakkante (32) abschneidbar ist.

6. Klemmkörper-Freilauf nach einem der Ansprüche 1 bis 5, dadurch gekannzeichnet, daß die Lasche (22) am Bandanfang abgeschnitten, am Bandende zu einem Haken (24) gebogen und im übrigen vorzugsweise unbearbeitet ist.

7. Klemmkörper-Freilauf nach einem der Ansprüche 1 bis 6, dadurch gekennzeichnet, daß im axialen Mittelbereich der Stege (12) eine in die Tasche (14) hineinragende, den Klemmkörper (16) beaufschlagende Federzunge (20) und in symmetrischer Anordnung beidseits davon je eine Lasche (22) ausgebildet ist.

8. Klemmkörper-Freilauf nach einem der Ansprüche 1 bis 6, dadurch gekennzeichnet, daß im axialen Mittelbereich der Stege (12) eine Lasche (22) und in symmetrischer Anordnung beidseits davon je eine in die Tasche (14) hineinragende, den Klemmkörper (16) beaufschlagende Federzunge (20) ausgebildet ist.

9. Klemmkörper-Freilauf nach einem der Ansprüche 1 bis 8, dadurch gekennzeichnet, daß die Ringsegmente (34) des Federrings (26) eine vorzugsweise durch Prägen erhaltene Wellung (36) aufweisen, und daß die Haken (24), die Federzungen (20) und gegebenenfalls die Wellung (36) nach radial innen oder radial außen weisen.

10. Klemmkörper-Freilauf nach einem der Ansprüche 1 bis 9, dadurch gekennzeichnet, daß die Federringe (26) aus von einem fort laufenden Band geschnittenen Federbandstücken bestehen.

11. Klemmkörper-Freilauf nach einem der Ansprüche 1 bis 10, dadurch gekennzeichnet, daß die Ringsegmente (34) am Bandende des Federbandstücks in Verlängerung der Stegvorderkante (28) durchtrennt sind, von der die Haken (24) abstehen.

12. Klemmkörper-Freilauf nach einem der Ansprüche 1 bis 11, dadurch gekennzeichnet, daß der Bandanfang eines Federbandstücks durch einen Steg (12) gebildet ist, von dem die Laschen (18, 22) abgeschnitten sind.

13. Klemmkörper-Freilauf nach einem der Ansprüche 1 bis 11, dadurch gekennzeichnet, daß die Ringsegmente (34) am Bandanfang eines Federbandstücks Überstand von dem ersten Steg (12) haben, von dem die Laschen (18, 22) abgeschnitten sind, und zwar vorzugsweise möglichst langen Überstand.

14. Klemmkörper-Freilauf nach einem der Ansprüche 1 bis 13, dadurch gekennzeichnet, daß der Käfigring (42) aus Metall besteht.

15. Klemmkörper-Freilauf nach einem der Ansprüche 1 bis 13, dadurch gekennzeichnet, daß der Käfigring (42) aus Kunststoff besteht.

## Claims

1. Sprag clutch freewheel having an inner ring (38) and an outer ring (40) which surround one another concentrically at a spacing, having substantially bone-shaped sprags (16) which are seated between the rings (38, 40), couple the rings (38, 40) in a torque-transmitting manner in one direction of rotation and permit free rotation of the one ring with respect to the other in the opposite direction, having a single cage ring (42) which is arranged between the inner ring (38) and the outer ring (40) at the level of the radially inner body thickened portion (50) of the sprags (16) and synchronously guides the latter, and having a continuous spring ring (26) which is arranged between the cage ring (42) and the outer ring (40) at the level of the radially central body narrowed portion (52) of the sprags (16), is made of a strip material, has mutually connectable strip ends and pre-loads the sprags (16) in the direction of rotation, characterized in that there are integrally formed on the webs (46) of the cage ring (42) ribs (54) which prevent sprags (16) from popping out.

2. Sprag clutch according to Claim 1, characterized in that the spring ring (26) is radially spaced from the cage ring (42).

3. Sprag clutch according to Claim 1, characterized in that the spring ring (26) is wrapped around the cage ring (42) in flush contact.

4. Sprag clutch according to one of Claims 1 to 3, characterized in that the strip ends of the spring ring (26) can be hooked together.

5. Sprag clutch according to one of Claims 1 to 4, characterized in that the spring ring (26) comprises two axially spaced ring segments (34) and, connecting the latter, axial webs (12) between which pockets (14) are formed for the sprags (16), and in that at least one tongue (22) is constructed on the webs (12), can be bent around to form a hook (24) and can be cut off at another point to form a hooking-in edge (32).

6. Sprag clutch according to one of Claims 1 to 5, characterized in that the tongue (22) is cut off at the strip start, is bent to form a hook (24) at the strip end and is otherwise preferably unprocessed.

7. Sprag clutch according to one of Claims 1 to 6, characterized in that there are constructed in the axial central region of the webs (12) a resilient tab (20) which projects into the pocket (14) and acts on the sprag (16) and, in a symmetrical arrangement on either side thereof, a respective tongue (22).

8. Sprag clutch according to one of Claims 1 to 6, characterized in that there are constructed in the axial central region of the webs (12) a tongue (22) and, in a symmetrical arrangement on either side thereof, a respective resilient tab (20) which projects into the pocket (14) and acts on the sprag (16).

9. Sprag clutch according to one of Claims 1 to 8, characterized in that the ring segments (34) of the spring ring (26) have an undulation (36) which is preferably obtained by stamping, and in that the hooks (24), the resilient tabs (20) and if appropriate the undulation (36) point radially inwards or radially outwards.

10. Sprag clutch according to one of Claims 1 to 9, characterized in that the spring rings (26) comprise resilient strip sections cut out of a continuous strip.

11. Sprag clutch according to one of Claims 1 to 10, characterized in that the ring segments (34) at the strip end of the resilient strip section are severed in an extension to the web front edge (28), from which the hooks (24) project.

12. Sprag clutch according to one of Claims 1 to 11, characterized in that the strip start of a resilient strip section is formed by a web (12) from which the tongues (18,22) are cut.

13. Sprag clutch according to one of Claims 1 to 11, characterized in that the ring segments (34) at the strip start of a resilient strip section reach beyond the first web (12) from which the tongues (18, 22) are cut, preferably reaching as far beyond as possible.

14. Sprag clutch according to one of Claims 1 to 13, characterized in that the cage ring (42) is made of metal.

15. Sprag clutch according to one of Claims 1 to 13, characterized in that the cage ring (42) is made of synthetic material.

## Revendications

1. Roue libre à corps de serrage comportant une bague intérieure (38) et une bague extérieure (40), qui s'entourent l'une l'autre concentriquement, à une certaine distance, comportant des corps de serrage (16) sensiblement en forme d'os, logés entre les bagues (38, 40), qui, dans un sens de rotation, accouplent les bagues (38, 40) en transmettant un couple et, dans le sens contraire, autorisent une libre rotation d'une bague par rapport à l'autre, comportant une seule bague en cage (42), placée entre la bague intérieure (38) et la bague extérieure (40), à hauteur de la surépaisseur (50) radialement intérieure des corps de serrage (16), guidant ceux-ci de manière synchrone et comportant une rondelle-ressort (26) fermée, située entre la bague en cage (42) et la bague extérieure (40), à hauteur du rétrécissement (52), radialement central, des corps de serrage (16), réalisée dans un matériau en bande, qui comporte des extrémités de bandes à relier entre elles et qui précontraint les corps de serrage (16) dans le sens de rotation, caractérisée en ce qu'il formé sur les cloisons (46) de la bague en cage (42), des nervures (54) empêchant la sortie des corps de serrage (16).

2. Roue libre à corps de serrage selon la revendication 1, caractérisée en ce que la rondelle-ressort (26) est espacée radialement de la bague en cage (42).

3. Roue libre à corps de serrage selon la revendication 1, caractérisée en ce que la rondelle-ressort (26) entoure en l'affleurant la bague en cage (42).

4. Roue libre à corps de serrage selon l'une des revendications 1 à 3, caractérisée en ce que les extrémités de bande de la rondelle-ressort (26) peuvent s'accrocher l'une à l'autre.

5. Roue libre à corps de serrage selon l'une des revendications 1 à 4, caractérisée en ce que la rondelleressort (26) est constituée de deux segments annulaires (34) espacés axialement et de cloisons (12) axiales reliant ceux-ci, entre lesquelles sont formées des poches (14) pour les corps de serrage (16), et en ce que sur les cloisons (12) il est formé au moins une attache (22) qui peut être repliée en un crochet (24) et qui, en un autre point, peut être coupée pour former un bord d'accrochage (32).

6. Roue libre à corps de serrage selon l'une des revendications 1 à 5, caractérisée en ce que l'attache (22) est coupée au début de la bande, repliée en un crochet (24) à l'extrémité de la bande et pour le reste, elle est de préférence non usinée.

7. Roue libre à corps de serrage selon l'une des revendications 1 à 6, caractérisée en ce que dans la zone centrale axiale des cloisons (12) il est formé une languette élastique (20) s'engageant dans la poche (14) agissant sur les corps de serrage (16) et, dans une disposition symétrique, de part et d'autre de celle-ci, une attache (22).

8. Roue libre à corps de serrage selon l'une des revendications 1 à 6, caractérisée en ce que dans la zone centrale axiale des cloisons (12) il est formé une attache (22) et, dans une disposition symétrique, de part et d'autre de celle-ci, une languette élastique (20) s'engageant dans la poche (14), agissant sur les corps de serrage (16).

9. Roue libre à corps de serrage selon l'une des revendications 1 à 8, caractérisée en ce que les segments annulaires (34) de la rondelle-ressort (26) présentent une ondulation (36) obtenue de préférence par estampage, et en ce que les crochets (24), les languettes élastiques (20) et éventuellement l'ondulation (36) sont dirigés radialement vers l'intérieur ou radialement vers l'extérieur.

10. Roue libre à corps de serrage selon l'une des revendications 1 à 9, caractérisée en ce que les rondellesressorts (26) sont constituées de tronçons de bande formant ressort, découpés dans une bande continue.

11. Roue libre à corps de serrage selon l'une des revendications 1 à 10, caractérisée en ce que les segments annulaires (34) sont sectionnés à l'extrémité du tronçon de bande formant ressort, dans le prolongement du bord avant (28) de la cloison, duquel les crochets (24) font saillie.

12. Roue libre à corps de serrage selon l'une des revendications 1 à 11, caractérisée en ce que le début de bande d'un tronçon de bande formant ressort est formé par une cloison (12) dans laquelle sont découpées les attaches (18, 22).

13. Roue libre à corps de serrage selon l'une des revendications 1 à 11, caractérisée en ce que les segments annulaires (34) présentent, au début d'un tronçon de bande formant ressort, un porte-à-faux par rapport à la première cloison (12) dans laquelle sont découpées les attaches (18, 22), et de préférence un porte-à-faux aussi long que possible.

14. Roue libre à corps de serrage selon l'une des revendications 1 à 13, caractérisée en ce que la bague en cage (42) est en métal.

15. Roue libre à corps de serrage selon l'une des revendications 1 à 13, caractérisée en ce que la bague en cage (42) est en matière plastique.
